# EUROPEAN PATENT SPECIFICATION

(11) **EP 2 888 606 B1**
(45) Date of publication and mention of the grant of the patent: **13.11.2019**
(21) Application number: 12889428.4
(22) Date of filing: 05.12.2012
(51) Int. Cl.: G01V 1/32, G01V 1/30, G06N 3/08

(54) **METHOD AND SYSTEM FOR 3D SEISMIC DATA DEPTH CONVERSION UTILIZING ARTIFICIAL NEURAL NETWORKS**
VERFAHREN UND SYSTEM ZUR TIEFENUMWANDLUNG SEISMISCHER 3D-DATEN MIT KÜNSTLICHEN NEURONALEN NETZWERKEN
PROCÉDÉ ET SYSTÈME POUR CONVERSION DE PROFONDEUR DE DONNÉES SISMIQUES TRIDIMENSIONNELLES UTILISANT DES RÉSEAUX NEURAUX ARTIFICIELS

(43) Date of publication of application: 01.07.2015
(73) Proprietor: Landmark Graphics Corporation, Houston, TX 77042 (US)
(72) Inventor: WIENER, Jacky, M., Aurora, CO 80016 (US); EBERHARD, Michael, John, Thornton, CO 80602 (US); LEVIN, Stewart, Arthur, Menlo Park, CA 94025-5935 (US)
(74) Representative: Jennings, Michael John
(86) International application number: PCT/US2012/067989
(87) International publication number: WO 2014/088571

(56) References cited:
- WO-A1-2012/105934
- US-A1- 2006 047 429
- US-A1- 2007 011 114
- US-A1- 2007 247 973
- US-A1- 2010 149 917
- US-A1- 2012 041 309
- NICK CRABTREE ET AL: "Depth prediction from a prestack depth image: A dutch North Sea case study", SEG TECHNICAL PROGRAM EXPANDED ABSTRACTS 2001, 14 September 2001 (2001-09-14), pages 1-4, XP055278941, DOI: 10.1190/1.1816701
- VAN DER MADE P M ET AL: "Depth Conversion Using Integrated Seismic, Well and Geological Data", SEG EXPANDED TECHNICAL ABSTRACTS, XX, XX, vol. 9, 1 January 1990 (1990-01-01), pages 1259-1262, XP002358517,
- VÌCTOR MERCADO HERRERA ET AL: "Neural networks in reservoir characterization", THE LEADING EDGE, vol. 25, no. 4, 30 April 2006 (2006-04-30) , pages 402-411, XP055278732, US ISSN: 1070-485X, DOI: 10.1190/1.2193208

## Description

### FIELD OF THE INVENTION

The present invention generally relates to systems and methods for three-dimensional ("3D") seismic data depth conversion utilizing artificial neural networks. More particularly, the present invention relates to the conversion of stacked or, preferably, time migrated 3D seismic data and associated seismic attributes from a time domain to a depth domain.

### BACKGROUND OF THE INVENTION

Converting 3D seismic data from a time domain to a depth domain is critically important for geoscientists and reservoir engineers involved in estimating reservoir reserves through reservoir characterization studies, horizontal well planning and geo-steering, stimulation design and reservoir simulation. Depth converted seismic data may be used to enhance stratigraphic mapping of reservoir porosity and thickness with well control, prove the structural/fault interpretation along the length of horizontal wells in order to stay in the hydrocarbon zone, to provide a more accurate framework for reservoir reserve calculations and overall asset management.

Many conventional techniques and procedures have been developed to convert seismic data from a time domain to a depth domain. These techniques include developing velocity models from check-shot surveys, velocity surveys, stacking velocities, tomography, acoustic inversion, well log data, and the like. Many of these techniques, however, are focused on the conversion of a reservoir horizon (structural mapping) from a time domain to a depth domain instead of converting a seismic volume and its associated seismic attributes from a time domain to a depth domain, which is commonly referred to as volume depthing. Moreover, the volume depthing currently practiced is never 100% accurate for use in reservoir characterization studies because the velocity model ends up being too simple for the resolution required. As a consequence, the reservoir interval of interest is smoothed or even lost in the result when the entire seismic volume is converted to a depth domain.

Modern seismic interpretation methods and tools routinely employ co-rendering of various seismic attributes alongside or overlaying the seismic volumes. Most of the hundred-plus attributes that are employed for seismic interpretation are both computed and interpreted in a time domain. Converting them to depth in tandem with depth conversion of the seismic data is generally feasible, but rarely done in practice. Furthermore, such attribute depth conversions suffer from the same losses of resolution in reservoir intervals noted above as the seismic depth conversion does. Indeed, due to the higher sharpness of many time-based attributes, the damage can be even more severe, Significant recent research has focused on horizon-based attributes such as coherence and curvature that can be computed either in a time or depth domain. Such attributes provide value in a depth domain, but are rarely interpreted, or even interpretable, as volume attributes in the depth domain. Clearly a high resolution method for mapping the many time domain reservoir attributes to a depth domain would be desirable to aid in improving the reliability and detail of seismic interpretation and subsequent reservoir evaluation and planning. US 2007/247973 A1 discloses a method for converting seismic data between bounding upper and lower surfaces in the time domain to the depth domain. An interval velocity value is determined for each seismic sample between the bounding time surfaces from velocity data generated from well logs. The seismic times between the bounding time surfaces are then converted to the depth domain by adding the thickness of each seismic sample to the upper depth surface, wherein the thickness of each seismic sample is a function of the seismic sample rate and interval velocity value for each seismic sample. According to US 2006/047429 A1 a method of estimating geological location depths is provided comprising a continuous, layer-by-layer computation of geological formation depths achieved by extracting values from horizon time data set at an exact geographic location of the next deeper horizon, thereby allowing interval computations to be carried out without the need for gridding.

### SUMMARY OF THE INVENTION

The present invention meets the above needs and overcomes one or more deficiencies in the prior art by providing systems and methods for the conversion of stacked, or preferably, time migrated 3D seismic data and associated seismic attributes from a time domain to a depth domain.

In one embodiment, the present invention includes a method for converting three-dimensional seismic data from a time domain to a depth domain, according to claim 1.

In another embodiment, the present invention comprises a program carrier device that is configured with computer executable instructions for converting three-dimensional seismic data from a time domain to a depth domain, according to claim 7.

In another embodiment, the present invention comprises a computer system for converting three-dimensional seismic data from a time domain to a depth domain, according to claim 9.

Additional aspects, advantages and embodiments of the invention will become apparent to those skilled in the art from the following description of the various embodiments and related drawings.

### BRIEF DESCRIPTION OF THE DRAWINGS

The present invention will be described with reference to the accompanying drawings in which like elements are referenced with like reference numerals, and in which:
**FIG. 1** is a flow diagram illustrating one embodiment of a method for implementing the present invention.
**FIG. 2** is a block diagram illustrating one embodiment of a system for implementing the present invention.

### DETAILED DESCRIPTION OF THE PREFERRED EMBODIMENTS

The subject matter of the present invention is described with specificity, however, the description itself is not intended to limit the scope of the invention. The subject matter thus, might also be embodied in other ways, to include different steps or combinations of steps similar to the ones described herein, in conjunction with other technologies. Moreover, although the term "step" may be used herein to describe different elements of methods employed, the term should not be interpreted as implying any particular order among or between various steps herein disclosed unless otherwise expressly limited by the description to a particular order. While the following description refers to the oil and gas industry, the systems and methods of the present invention are not limited thereto and may also be applied in other industries, such as water resource management, carbon sequestration, or medical imaging to achieve similar results.

### Method Description

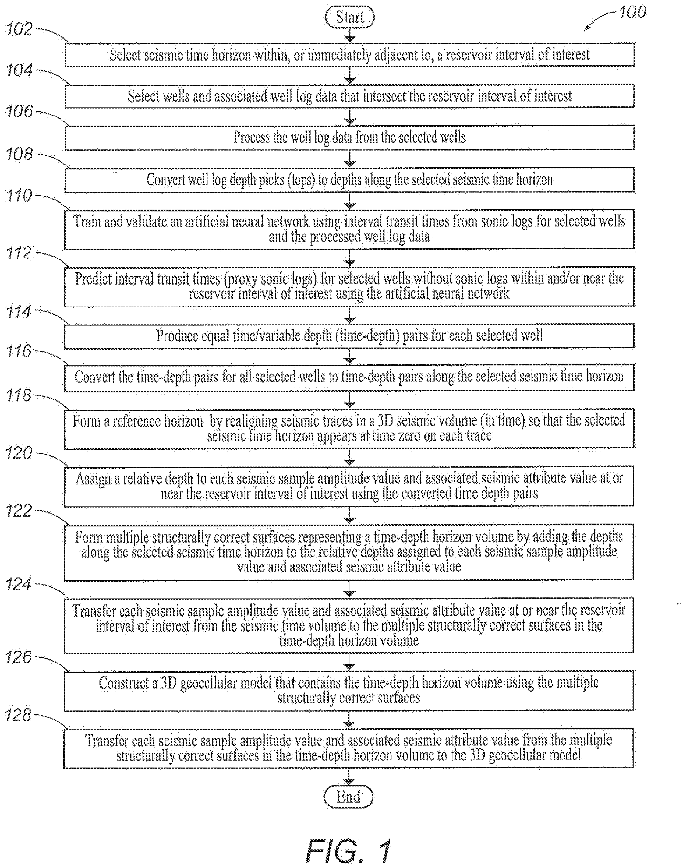

Referring now to **FIG. 1**, a flow diagram of one embodiment of a method **100** for implementing the present invention is illustrated. The method **100** provides a very efficient way to easily convert, with high resolution, 3D seismic data and associated seismic attributes from a time domain to a depth domain for use in reservoir studies. In the presence of structural overburden complexity, the time-migrated seismic data may be image-ray corrected using the method of Larner, et al. (1981). The method **100** incorporates one or more steps for training a multi-perception back-propagation artificial neural network to learn the interval transit times for each well in the reservoir study area. An artificial neural network is used for the purpose of predicting sonic logs from other logs related to the same well for wells where sonic logs are not available or are available but contaminated with unacceptable noise. The artificial neural network may be trained to predict sonic logs using wells that do have good sonic logs. The reasonable underlying assumption is that unknown lateral variations of the artificial neural network coefficients would be insignificant within the specific reservoir interval of interest due to similarity in geology, burial history, etc. and thus, a single artificial neural network can be used for all of the wells. More than one artificial neural network, however, may be preferred.

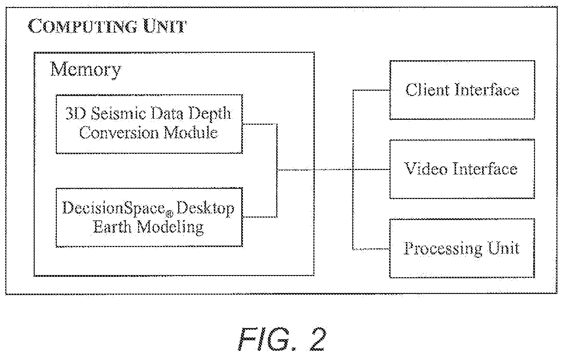

In step **102**, a seismic time horizon is selected within, or immediately adjacent to, a reservoir interval of interest using the client interface and/or the video interface described in reference to **FIG. 2** and techniques well known in the art. The reservoir interval may be interpreted using the reservoir seismic data in order that the seismic time horizon may be identified and selected within, or immediately adjacent to, the reservoir interval of interest. The seismic time horizon may arise from a reflection from the top or base of the reservoir interval or a reflection from some other layering within, immediately above or immediately below the reservoir interval. Alternatively, a seismic depth horizon may be selected in the same manner with depth-migrated seismic data instead of with time-migrated seismic data when in the presence of structural complexity in both the overburden and reservoir, The seismic depth horizon may be converted to a seismic time horizon using techniques well known in the art such as, for example, ray tracing or eikonal methods, while maintaining the well locations on the seismic time horizon.

In step **104**, wells and associated well log data that intersect the reservoir interval of interest may be selected using the client interface and/or the video interface described in reference to **FIG. 2**.

In step **106**, the well log data from the selected wells may be processed using well-known multi-variate statistical techniques to remove unreliable data components, like noise. The well log data may comprise, for example, available data from open hole or cased hole well log data.

In step **108**, the well log depth picks (tops) may be converted to depths along the selected seismic time horizon using techniques well known in the art. The depth of the reflecting horizon corresponding to the selected seismic time horizon is identified in the wells and those depth picks may be interpolated and/or extrapolated using techniques such as kriging to provide a depth for every sampled location within the selected seismic time horizon.

In step **110**, an artificial neural network is trained and validated using interval transit times from sonic logs for the selected wells, the processed well log data and techniques well known in the art.

In step **112**, interval transit times (proxy sonic logs) for the selected wells without valid sonic logs within and/or near the reservoir interval of interest are predicted using the artificial neural network. The interval transit times generated by the artificial neural network may be carefully analyzed and studied using well-known quality control techniques to confirm the level of accuracy required for each interval transit time.

In step **114**, equal time/variable depth (time-depth) pairs are produced for each selected well in the reservoir interval of interest by numerically integrating the interval transit times from sonic logs for the selected wells and the interval transit times for the proxy sonic logs. The time origin for the integration is established at the depth of the selected seismic time horizon for each well location. The equal time increment is preferably that of the seismic data being analyzed, often 2 milliseconds, although a finer increment may be chosen and the seismic data resampled to that finer increment to facilitate visualization and interpretation. The variable depth reservoir interval may be as small or as large as necessary. Care is taken to make small adjustments as needed to ensure that the depths are consistent with available geological horizon picks. In this manner, a highly accurate time-depth model may be developed that takes into account both the vertical variation and the lateral variation at an extremely detailed level. By comparison, other conventional techniques may only use as few as one well or one check-shot survey, resulting in an over-simplified, smoothed velocity model producing a time-depth relationship without the necessary detail.

In step **116**, the time-depth pairs for all selected wells are converted to time-depth pairs along the selected seismic time horizon using techniques well-known in the art.

In step **118**, a reference horizon is formed by realigning seismic traces in a 3D seismic volume (in time) so that the selected seismic time horizon appears at time zero on each trace. Each individual seismic trace in the seismic time volume is shifted up or down so that the selected seismic time horizon on each trace assumes a new constant time. For example, if on seismic trace (I,J) the reference horizon time is 2.14 seconds and the constant time is 1.96 seconds, then the entire seismic trace would be realigned by shifting upward 0.18 seconds. After each seismic trace (I,J) is processed, the reference horizon will appear as a flat horizon aligned at 1.96 seconds on every seismic trace. At this point the reference horizon is the origin time for all subsequent depthing.

In step **120**, a relative depth is assigned to each seismic sample amplitude value and associated seismic attribute value at or near the reservoir interval of interest using the converted time-depth pairs. If for example, the seismic data is sampled at a constant time step (e.g. 2 millisecond increments) and the reference horizon is a 1.996 second horizontal slice, it is followed in time by a 1.998 time slice, a 2.000 second time slice, etc. The subsurface distance between each horizontal slice is generally not a constant depth increment, but will generally vary from trace to trace and time to time. In the case of linear increase of velocity with depth, the depth steps grow exponentially with time. So if the horizon is at 1.996 seconds, the 1.998 second time slice might correspond to a position 6 feet below the reference horizon and the 2,000 second time slice to a position 15 feet below the reference horizon.

In step **122**, multiple structurally correct surfaces representing a time-depth horizon volume may be formed by adding the depths along the selected seismic time horizon to the depths assigned to each seismic sample amplitude value and associated seismic attribute value. In this manner, an absolute depth for each seismic sample amplitude value and associated seismic attribute value at and/or near the reservoir interval of interest may be determined. Each depth corresponds to a time-depth pair along the selected seismic time horizon and defines a structurally correct surface in depth. The collection of the multiple structurally correct surfaces define a time-depth horizon volume and bound a depth volume within the subsurface.

In step **124**, each seismic sample amplitude value and associated seismic attribute value at or near the reservoir interval of interest is transferred from the seismic time volume to the multiple structurally correct surfaces in the time-depth horizon volume using techniques well-known in the art such as, for example, arithmetic (mean, closest to node, median, average, etc.) methods, geometric methods, or geostatistical methods. In this manner, the seismic time volume and the time-depth horizon volume are colocated. Preferably, the seismic attributes are transferred from the seismic time volume to the multiple structurally correct surfaces in the time-depth horizon volume using the value closest to the horizon sample location as it appears to be statistically the most accurate. Additionally, when the selected seismic time horizon has significant structural complexity prior to realigning, it is preferable to recompute seismic attributes in a direction most perpendicular to that surface as described in US Patent No. 7,702,463 prior to transferring them to the multiple structurally correct surfaces.

In step **126**, a 3D geocellular model is constructed that contains the time-depth horizon volume using the multiple structurally correct surfaces and techniques well-known in the art such as those embodied in commercial software packages such as Landmark Graphics Corporation's DecisionSpace® Desktop.

In step **128**, each seismic sample amplitude value and associated seismic attribute value from the structurally correct surfaces in the time-depth horizon volume is transferred to the 3D geocellular model using techniques well known in the art. Because each seismic attribute value is in the depth domain and perfectly collocated with the reservoir well interval, engineering data and micro-seismic information, the 3D geocellular model may be used in reservoir and/or other oil and gas characterization studies as well as horizontal well planning in unconventional reservoirs. Additional benefits may include, for example, use of the results for designing well stimulation, micro-seismic detection (fault detection) and wireline logging.

### System Description

The present invention may be implemented through a computer-executable program of instructions, such as program modules, generally referred to software applications or application programs executed by a computer. The software may include, for example, routines, programs, objects, components and data structures that perform particular tasks or implement particular abstract data types. The software forms an interface to allow a computer to react according to a source of input. DecisionSpace® Desktop Earth Modeling, which is a commercial software application marketed by Landmark Graphics Corporation, may be used as an interface application to implement the present invention. The software may also cooperate with other code segments to initiate a variety of tasks in response to data received in conjunction with the source of the received data. Other code segments may provide optimization components including, but not limited to, neural networks, earth modeling, history matching, optimization, visualization, data management, reservoir simulation and economics. The software may be stored and/or carried on any variety of memory such as CD-ROM, magnetic disk, bubble memory and semiconductor memory (*e.g*., various types of RAM or ROM). Furthermore, the software and its results may be transmitted over a variety of carrier media such as optical fiber, metallic wire, and/or through any of a variety of networks, such as the Internet.

Moreover, those skilled in the art will appreciate that the invention may be practiced with a variety of computer-system configurations, including hand-held devices, multiprocessor systems, microprocessor-based or programmable-consumer electronics, minicomputers, mainframe computers, and the like. Any number of computer-systems and computer networks are acceptable for use with the present invention. The invention may be practiced in distributed-computing environments where tasks are performed by remote-processing devices that are linked through a communications network. In a distributed-computing environment, program modules may be located in both local and remote computer-storage media including memory storage devices. The present invention may therefore, be implemented in connection with various hardware, software or a combination thereof, in a computer system or other processing system.

Referring now to **FIG. 2**, a block diagram illustrates one embodiment of a system for implementing the present invention on a computer. The system includes a computing unit, sometimes referred to as a computing system, which contains memory, application programs, a client interface, a video interface, and a processing unit. The computing unit is only one example of a suitable computing environment and is not intended to suggest any limitation as to the scope of use or functionality of the invention.

The memory primarily stores the application programs, which may also be described as program modules containing computer-executable instructions, executed by the computing unit for implementing the present invention described herein and illustrated in **FIG. 1**. The memory therefore, includes a 3D seismic data depth conversion module, which enables the methods illustrated and described in reference to **FIG. 1** and integrates functionality from the remaining application programs illustrated in **FIG. 2**. The memory also includes DecisionSpace® Desktop Earth Modeling, which may be used as an interface application to supply well log input data to the 3D seismic data depth conversion module and/or display the data results from the 3D seismic data depth conversion module. Although DecisionSpace® Desktop Earth Modeling may be used as an interface application, other interface applications may be used, instead, or the 3D seismic data depth conversion module may be used as a stand-alone application.

Although the computing unit is shown as having a generalized memory, the computing unit typically includes a variety of computer readable media. By way of example, and not limitation, computer readable media may comprise computer storage media and communication media. The computing system memory may include computer storage media in the form of volatile and/or nonvolatile memory such as a read only memory (ROM) and random access memory (RAM). A basic input/output system (BIOS), containing the basic routines that help to transfer information between elements within the computing unit, such as during start-up, is typically stored in ROM. The RAM typically contains data and/or program modules that are immediately accessible to, and/or presently being operated on, the processing unit. By way of example, and not limitation, the computing unit includes an operating system, application programs, other program modules, and program data.

The components shown in the memory may also be included in other removable/nonremovable, volatile/nonvolatile computer storage media or they may be implemented in the computing unit through an application program interface ("API") or cloud computing, which may reside on a separate computing unit connected through a computer system or network. For example only, a hard disk drive may read from or write to nonremovable, nonvolatile magnetic media, a magnetic disk drive may read from or write to a removable, nonvolatile magnetic disk, and an optical disk drive may read from or write to a removable, nonvolatile optical disk such as a CD ROM or other optical media. Other removable/non-removable, volatile/nonvolatile computer storage media that can be used in the exemplary operating environment may include, but are not limited to, magnetic tape cassettes, flash memory cards, digital versatile disks, digital video tape, solid state RAM, solid state ROM, and the like. The drives and their associated computer storage media discussed above provide storage of computer readable instructions, data structures, program modules and other data for the computing unit.

A client may enter commands and information into the computing unit through the client interface, which may be input devices such as a keyboard and pointing device, commonly referred to as a mouse, trackball or touch pad. Input devices may include a microphone, joystick, satellite dish, scanner, or the like. These and other input devices are often connected to the processing unit through the client interface that is coupled to a system bus, but may be connected by other interface and bus structures, such as a parallel port or a universal serial bus (USB).

A monitor or other type of display device may be connected to the system bus via an interface, such as a video interface. A graphical user interface ("GUI") may also be used with the video interface to receive instructions from the client interface and transmit instructions to the processing unit. In addition to the monitor, computers may also include other peripheral output devices such as speakers and printer, which may be connected through an output peripheral interface.

Although many other internal components of the computing unit are not shown, those of ordinary skill in the art will appreciate that such components and their interconnection are well-known.

While the present invention has been described in connection with presently preferred embodiments, it will be understood by those skilled in the art that it is not intended to limit the invention to those embodiments. It is therefore, contemplated that various alternative embodiments and modifications may be made to the disclosed embodiments as defined by the appended claims.

## Claims

1. A computer implemented method for converting three-dimensional seismic data from a time domain to a depth domain, which comprises:
training (110) an artificial neural network using interval transit times from sonic logs for selected wells;
predicting (112) the interval transit times for selected wells without sonic logs within or near a reservoir interval of interest using the artificial neural network;
producing (114) for each selected well in the reservoir interval of interest time-depth pairs by numerically integrating the interval transit times for the selected wells with the sonic logs and the predicted interval transit times for the selected wells without sonic logs;
converting (116) the time-depth pairs for the selected wells to time-depth pairs along a seismic time horizon selected within the reservoir interval of interest;
forming (118) a reference horizon by realigning seismic traces in a three-dimensional seismic time volume to align the seismic time horizon with a time zero on each trace;
assigning (120) a relative depth to each seismic sample value and respective seismic attribute value at or near the reservoir interval of interest using the converted time-depth pairs;
forming (122) multiple structurally correct surfaces representing a time-depth horizon volume based on the relative depth assigned to each seismic sample amplitude value and respective seismic attribute value and on a corresponding time-depth pair along the seismic time horizon; and
transferring (124) each seismic sample value and respective seismic attribute value at or near the reservoir interval of interest from the seismic time volume to the multiple structurally correct surfaces in the time-depth horizon volume;
constructing (126) a three-dimensional geocellular model that contains the time-depth horizon volume using the multiple structurally correct surfaces; and
transferring (128) each seismic sample value and respective seismic attribute value from the multiple structurally correct surfaces in the time-depth horizon volume to the three-dimensional geocellular model.

2. The method of claim 1, wherein the selected wells intersect the reservoir interval of interest.

3. The method of claim 1, wherein the multiple structurally correct surfaces representing the time-depth horizon volume are formed by adding depths along the seismic time horizon to the relative depths assigned to each seismic sample value and respective seismic attribute value.

4. The method of claim 3, wherein the depths along the seismic time horizon are converted from well log depth picks for the selected wells.

5. The method of claim 3, wherein the addition of the depths along the seismic time horizon and the relative depths assigned to each seismic sample value and respective seismic attribute value represent an absolute depth for each seismic sample value and respective seismic attribute value, and define a structurally correct surface at each absolute depth.

6. The method of claim 1, wherein the seismic time horizon is obtained by converting a seismic depth horizon to the seismic time horizon.

7. A program carrier device that is configured with computer executable instructions for converting three-dimensional seismic data from a time domain to a depth domain, the instructions being executable to implement:
training (110) an artificial neural network using interval transit times from sonic logs for selected wells;
predicting (112) the interval transit times for selected wells without sonic logs within or near a reservoir interval of interest using the artificial neural network;
producing (114) for each selected well in the reservoir interval of interest time-depth pairs by numerically integrating the interval transit times for the selected wells with the sonic logs and the predicted interval transit times for the selected wells without sonic logs;
converting (116) the time-depth pairs for the selected wells to time-depth pairs along a seismic time horizon selected within the reservoir interval of interest;
forming (118) a reference horizon by realigning seismic traces in a three-dimensional seismic time volume to align the seismic time horizon with a time zero on each trace;
assigning (120) a relative depth to each seismic sample value and respective seismic attribute value at or near the reservoir interval of interest using the converted time-depth pairs;
forming (122) multiple structurally correct surfaces representing a time-depth horizon volume based on the relative depth assigned to each seismic sample amplitude value and respective seismic attribute value and on a corresponding time-depth pair along the seismic time horizon; and
transferring (124) each seismic sample value and respective seismic attribute value at or near the reservoir interval of interest from the seismic time volume to the multiple structurally correct surfaces in the time-depth horizon volume;
constructing (126) a three-dimensional geocellular model that contains the time-depth horizon volume using the multiple structurally correct surfaces; and
transferring (128) each seismic sample value and respective seismic attribute value from the multiple structurally correct surfaces in the time-depth horizon volume to the three-dimensional geocellular model.

8. The program carrier device of claim 7, wherein the multiple structurally correct surfaces representing the time-depth horizon volume are formed by adding depths along the seismic time horizon to the relative depths assigned to each seismic sample value and respective seismic attribute value.

9. A computer system for converting three-dimensional seismic data from a time domain to a depth domain, comprising:
a processing unit;
and the program carrier device of claim 7.

## Patentansprüche

1. Computerimplementiertes Verfahren zum Umwandeln von dreidimensionalen seismischen Daten aus einer Zeitdomäne in eine Tiefendomäne, das Folgendes umfasst:
Trainieren (110) eines künstlichen neuronalen Netzwerks unter Verwendung von Intervallübergangszeiten aus Schallprotokollen für ausgewählte Wells;
Vorhersagen (112) der Intervallübergangszeiten für ausgewählte Wells ohne Schallprotokolle innerhalb oder nahe eines Reservoirintervalls von Interesse unter Verwendung des künstlichen neuronalen Netzwerks;
Erzeugen (114) von Zeit-Tiefen-Paaren für jedes ausgewählte Well in dem Reservoirintervall von Interesse, indem die Intervallübergangszeiten für die ausgewählten Wells mit den Schallprotokollen und die vorhergesagten Intervallübergangszeiten für die ausgewählten Wells ohne Schallprotokolle nummerisch integriert werden;
Umwandeln (116) der Zeit-Tiefen-Paare für die ausgewählten Wells in Zeit-Tiefen-Paare entlang eines seismischen Zeithorizonts, der innerhalb des Reservoirintervalls von Interesse ausgewählt wird;
Bilden (118) eines Referenzhorizonts, indem seismische Spuren in einem dreidimensionalen seismischen Zeitvolumen neu ausgerichtet werden, um den seismischen Zeithorizont mit einer Zeit Null an jeder Spur auszurichten;
Zuweisen (120) einer relativen Tiefe zu jedem seismischen Probenwert und jeweiligen seismischen Attributwert an oder nahe dem Reservoirintervall von Interesse unter Verwendung der umgewandelten Zeit-Tiefen-Paare;
Bilden (122) mehrerer strukturell korrekter Oberflächen, die ein Zeit-Tiefen-Horizontvolumen darstellen, auf Grundlage der relativen Tiefe, die jedem seismischen Probenamplitudenwert und jeweiligen seismischen Attributwert zugewiesen ist, und an einem entsprechenden Zeit-Tiefen-Paar entlang des seismischen Zeithorizonts; und
Übertragen (124) jedes seismischen Probenwertes und jeweiligen seismischen Attributwertes an oder nahe dem Reservoirintervall von Interesse von dem seismischen Zeitvolumen auf die mehreren strukturell korrekten Oberflächen in dem Zeit-Tiefen-Horizontvolumen;
Konstruieren (126) eines dreidimensionalen geozellulären Modells, das das Zeit-Tiefen-Horizontvolumen enthält, unter Verwendung der mehreren strukturell korrekten Oberflächen; und Übertragen (128) jedes seismischen Probenwertes und jeweiligen seismischen Attributwertes von den mehreren strukturell korrekten Oberflächen in dem Zeit-Tiefen-Horizontvolumen auf das dreidimensionale geozelluläre Modell.

2. Verfahren nach Anspruch 1, wobei die ausgewählten Wells das Reservoirintervall von Interesse schneiden.

3. Verfahren nach Anspruch 1, wobei die mehreren strukturell korrekten Oberflächen, die das Zeit-Tiefen-Horizontvolumen darstellen, gebildet werden, indem Tiefen entlang des seismischen Zeithorizonts den relativen Tiefen hinzugefügt werden, die jedem seismischen Probenwert und jeweiligen seismischen Attributwert zugewiesen sind.

4. Verfahren nach Anspruch 3, wobei die Tiefen entlang des seismischen Zeithorizonts von Well-Protokoll-Tiefen-Picks für die ausgewählten Wells umgewandelt werden.

5. Verfahren nach Anspruch 3, wobei die Hinzufügung der Tiefen entlang des seismischen Zeithorizonts und der relativen Tiefen, die jedem seismischen Probenwert und jeweiligem seismischen Attributwert zugewiesen werden, eine absolute Tiefe für jeden seismischen Probenwert und jeweiligen seismischen Attributwert darstellen und eine strukturell korrekte Oberfläche an jeder absoluten Tiefe definieren.

6. Verfahren nach Anspruch 1, wobei der seismische Zeithorizont erhalten wird, indem ein seismischer Tiefenhorizont in den seismischen Zeithorizont umgewandelt wird.

7. Programmträgervorrichtung, die mit computerausführbaren Anweisungen konfiguriert ist, um dreidimensionale seismische Daten aus einer Zeitdomäne in eine Tiefendomäne umzuwandeln, wobei die Anweisungen ausführbar sind, um Folgendes zu implementieren:
Trainieren (110) eines künstlichen neuronalen Netzwerks unter Verwendung von Intervallübergangszeiten aus Schallprotokollen für ausgewählte Wells;
Vorhersagen (112) der Intervallübergangszeiten für ausgewählte Wells ohne Schallprotokolle innerhalb oder nahe eines Reservoirintervalls von Interesse unter Verwendung des künstlichen neuronalen Netzwerks;
Erzeugen (114) von Zeit-Tiefen-Paaren für jedes ausgewählte Well in dem Reservoirintervall von Interesse, indem die Intervallübergangszeiten für die ausgewählten Wells mit den Schallprotokollen und die vorhergesagten Intervallübergangszeiten für die ausgewählten Wells ohne Schallprotokolle nummerisch integriert werden;
Umwandeln (116) der Zeit-Tiefen-Paare für die ausgewählten Wells in Zeit-Tiefen-Paare entlang eines seismischen Zeithorizonts, der innerhalb des Reservoirintervalls von Interesse ausgewählt wird;
Bilden (118) eines Referenzhorizonts, indem seismische Spuren in einem dreidimensionalen seismischen Zeitvolumen neu ausgerichtet werden, um den seismischen Zeithorizont mit einer Zeit Null an jeder Spur auszurichten;
Zuweisen (120) einer relativen Tiefe zu jedem seismischen Probenwert und jeweiligen seismischen Attributwert an oder nahe dem Reservoirintervall von Interesse unter Verwendung der umgewandelten Zeit-Tiefen-Paare;
Bilden (122) mehrerer strukturell korrekter Oberflächen, die ein Zeit-Tiefen-Horizontvolumen darstellen, auf Grundlage der relativen Tiefe, die jedem seismischen Probenamplitudenwert und jeweiligen seismischen Attributwert zugewiesen ist, und an einem entsprechenden Zeit-Tiefen-Paar entlang des seismischen Zeithorizonts; und
Übertragen (124) jedes seismischen Probenwertes und jeweiligen seismischen Attributwertes an oder nahe dem Reservoirintervall von Interesse von dem seismischen Zeitvolumen auf die mehreren strukturell korrekten Oberflächen in dem Zeit-Tiefen-Horizontvolumen;
Konstruieren (126) eines dreidimensionalen geozellulären Modells, das das Zeit-Tiefen-Horizontvolumen enthält, unter Verwendung der mehreren strukturell korrekten Oberflächen; und Übertragen (128) jedes seismischen Probenwertes und jeweiligen seismischen Attributwertes von den mehreren strukturell korrekten Oberflächen in dem Zeit-Tiefen-Horizontvolumen auf das dreidimensionale geozelluläre Modell.

8. Programmträgervorrichtung nach Anspruch 7, wobei die mehreren strukturell korrekten Oberflächen, die das Zeit-Tiefen-Horizontvolumen darstellen, gebildet werden, indem Tiefen entlang des seismischen Zeithorizonts den relativen Tiefen hinzugefügt werden, die jedem seismischen Probenwert und jeweiligen seismischen Attributwert zugewiesen sind.

9. Computersystem zum Umwandeln von dreidimensionalen seismischen Daten aus einer Zeitdomäne in eine Tiefendomäne, umfassend:
eine Verarbeitungseinheit;
und die Programmträgervorrichtung nach Anspruch 7.

## Revendications

1. Procédé mis en œuvre par ordinateur pour convertir des données sismiques tridimensionnelles d'un domaine temporel en un domaine de profondeur, qui comprend :
la formation (110) d'un réseau neural artificiel en utilisant des temps de transit à intervalles à partir de diagraphies soniques pour des puits sélectionnés ;
la prédiction (112) des temps de transit à intervalles pour des puits sélectionnés sans diagraphies soniques dans ou à proximité d'un intervalle de réservoir d'intérêt en utilisant le réseau neural artificiel ;
la production (114) pour chaque puits sélectionné dans les paires temps-profondeur d'intervalle de réservoir d'intérêt en intégrant numériquement les temps de transit à intervalles pour les puits sélectionnés avec les diagraphies soniques et les temps de transit à intervalles prévus pour les puits sélectionnés sans diagraphies soniques ;
la conversion (116) des paires temps-profondeur pour les puits sélectionnés en paires temps-profondeur le long d'un horizon temporel sismique sélectionné dans l'intervalle de réservoir d'intérêt ;
la formation (118) d'un horizon de référence en réalignant des traces sismiques dans un volume temporel sismique tridimensionnel pour aligner l'horizon temporel sismique avec un temps zéro sur chaque trace ;
l'attribution (120) d'une profondeur relative à chaque valeur d'échantillon sismique et valeur d'attribut sismique respective au niveau ou à proximité de l'intervalle de réservoir d'intérêt en utilisant les paires temps-profondeur converties ;
la formation (122) de multiples surfaces structurellement correctes représentant un volume d'horizon temps-profondeur sur la base de la profondeur relative attribuée à chaque valeur d'amplitude d'échantillon sismique et valeur d'attribut sismique respective et d'une paire temps-profondeur correspondante le long de l'horizon temporel sismique ; et
le transfert (124) de chaque valeur d'échantillon sismique et valeur d'attribut sismique respective au niveau ou à proximité de l'intervalle de réservoir d'intérêt du volume temporel sismique vers les multiples surfaces structurellement correctes dans le volume d'horizon temps-profondeur ;
la construction (126) d'un modèle géocellulaire tridimensionnel qui contient le volume d'horizon temps-profondeur en utilisant les multiples surfaces structurellement correctes ; et
le transfert (128) de chaque valeur d'échantillon sismique et valeur d'attribut sismique respective des multiples surfaces structurellement correctes dans le volume d'horizon temps-profondeur vers le modèle géocellulaire tridimensionnel.

2. Procédé selon la revendication 1, dans lequel les puits sélectionnés coupent l'intervalle de réservoir d'intérêt.

3. Procédé selon la revendication 1, dans lequel les multiples surfaces structurellement correctes représentant le volume d'horizon temps-profondeur sont formées en ajoutant des profondeurs le long de l'horizon temporel sismique aux profondeurs relatives attribuées à chaque valeur d'échantillon sismique et valeur d'attribut sismique respective.

4. Procédé selon la revendication 3, dans lequel les profondeurs le long de l'horizon temporel sismique sont converties à partir de pics de profondeur de diagraphie de puits pour les puits sélectionnés.

5. Procédé selon la revendication 3, dans lequel l'ajout des profondeurs le long de l'horizon temporel sismique et des profondeurs relatives attribuées à chaque valeur d'échantillon sismique et valeur d'attribut sismique respective représente une profondeur absolue pour chaque valeur d'échantillon sismique et valeur d'attribut sismique respective, et définit une surface structurellement correcte au niveau de chaque profondeur absolue.

6. Procédé selon la revendication 1, dans lequel l'horizon temporel sismique est obtenu en convertissant un horizon de profondeur sismique en horizon temporel sismique.

7. Dispositif porteur de programme qui est configuré avec des instructions pouvant être exécutées par un ordinateur pour convertir des données sismiques tridimensionnelles d'un domaine temporel en un domaine de profondeur, les instructions pouvant être exécutées pour mettre en œuvre :
la formation (110) d'un réseau neural artificiel en utilisant des temps de transit à intervalles à partir de diagraphies soniques pour des puits sélectionnés ;
la prédiction (112) des temps de transit à intervalles pour des puits sélectionnés sans diagraphies soniques dans ou à proximité d'un intervalle de réservoir d'intérêt en utilisant le réseau neural artificiel ;
la production (114) pour chaque puits sélectionné dans les paires temps-profondeur d'intervalle de réservoir d'intérêt en intégrant numériquement les temps de transit à intervalles pour les puits sélectionnés avec les diagraphies soniques et les temps de transit à intervalles prévus pour les puits sélectionnés sans diagraphies soniques ;
la conversion (116) des paires temps-profondeur pour les puits sélectionnés en paires temps-profondeur le long d'un horizon temporel sismique sélectionné dans l'intervalle de réservoir d'intérêt ;
la formation (118) d'un horizon de référence en réalignant des traces sismiques dans un volume temporel sismique tridimensionnel pour aligner l'horizon temporel sismique avec un temps zéro sur chaque trace ;
l'attribution (120) d'une profondeur relative à chaque valeur d'échantillon sismique et valeur d'attribut sismique respective au niveau ou à proximité de l'intervalle de réservoir d'intérêt en utilisant les paires temps-profondeur converties ;
la formation (122) de multiples surfaces structurellement correctes représentant un volume d'horizon temps-profondeur sur la base de la profondeur relative attribuée à chaque valeur d'amplitude d'échantillon sismique et valeur d'attribut sismique respective et d'une paire temps-profondeur correspondante le long de l'horizon temporel sismique ; et
le transfert (124) de chaque valeur d'échantillon sismique et valeur d'attribut sismique respective au niveau ou à proximité de l'intervalle de réservoir d'intérêt du volume temporel sismique vers les multiples surfaces structurellement correctes dans le volume d'horizon temps-profondeur ;
la construction (126) d'un modèle géocellulaire tridimensionnel qui contient le volume d'horizon temps-profondeur en utilisant les multiples surfaces structurellement correctes ; et
le transfert (128) de chaque valeur d'échantillon sismique et valeur d'attribut sismique respective des multiples surfaces structurellement correctes dans le volume d'horizon temps-profondeur vers le modèle géocellulaire tridimensionnel.

8. Dispositif porteur de programme selon la revendication 7, dans lequel les multiples surfaces structurellement correctes représentant le volume d'horizon temps-profondeur sont formées en ajoutant des profondeurs le long de l'horizon temporel sismique aux profondeurs relatives attribuées à chaque valeur d'échantillon sismique et valeur d'attribut sismique respective.

9. Système informatique pour convertir des données sismiques tridimensionnelles d'un domaine temporel en un domaine de profondeur, comprenant :
une unité de traitement ;
et le dispositif porteur de programme selon la revendication 7.
